# FASCICULE DE BREVET EUROPEEN

(11) **EP 1 735 207 B1**
(45) Date de publication et mention de la délivrance du brevet: **14.07.2010**
(21) Numéro de dépôt: 04816581.5
(22) Date de dépôt: 20.12.2004
(51) Int. Cl.: B62D 27/02, B62D 21/04

(54) **AGENCEMENT POUR LA FIXATION D'UN ELEMENT MECANIQUE DE RENFORT POUR VEHICULE AUTOMOBILE A UN LONGERON**
ANORDNUNG ZUR BEFESTIGUNG EINER MECHANISCHEN VERSTÄRKUNGSKOMPONENTE FÜR EIN KRAFTFAHRZEUG AN EINEM SEITENGLIED
ARRANGEMENT FOR FIXING A MECHANICAL REINFORCING COMPONENT FOR A MOTOR VEHICLE TO A SIDE MEMBER

(30) Priorité: 31.12.2003 FR 0315617
(43) Date de publication de la demande: 27.12.2006
(73) Titulaire: RENAULT S.A.S., 92100 Boulogne Billancourt (FR)
(72) Inventeur: HLUBINA, Thierry, F-92370 Chaville (FR)
(86) Numéro de dépôt international: PCT/FR2004/050732
(87) Numéro de publication internationale: WO 2005/073057

(56) Documents cités:
- EP-A- 0 825 096
- US-A- 3 556 552
- PATENT ABSTRACTS OF JAPAN vol. 0162, no. 50 (M-1262), 8 juin 1992 (1992-06-08) & JP 04 059490 A (NISSAN MOTOR CO LTD), 26 février 1992 (1992-02-26)

## Description

L'invention concerne un agencement pour la fixation d'un élément mécanique de véhicule automobile à un longeron longitudinal du véhicule.

L'invention concerne plus particulièrement un agencement pour la fixation d'un élément mécanique de véhicule automobile à un longeron longitudinal du véhicule, du type dans lequel le longeron est constitué d'un profilé tubulaire présentant sensiblement la forme d'un "U" dont une partie d'extrémité comporte une paroi inférieure délimitée par deux ailes sensiblement verticale dans laquelle sont pratiqués au moins deux perçages, par exemple décalés transversalement, pour la fixation d'un élément mécanique du véhicule, et du type dans lequel le longeron reçoit des moyens de rigidification agencés dans le longeron au droit de ses perçages de fixation.

Le document US 3 556 552 évoque notamment des moyens de rigidification d'un longeron creux, tels que décrit par le préambule de la revendication 1.

On connaît de nombreux exemples d'agencements de ce type.

Il s'agit pour la plupart d'agencements dans lesquels le longeron est renforcé au niveau de chacun de des perçages de fixation par l'intermédiaire d'une plaque de renfort indépendante qui est soudée au droit du perçage et qui comporte un perçage coïncidant avec le perçage de fixation du longeron.

Cette conception ne permet pas de rigidifier le longeron entre les plaques de renfort. Par ailleurs, la présence de renforts localisés interdit de pratiquer dans le longeron des orifices d'évacuation des liquides, et notamment des produits de condensation, de sorte que le longeron peut être soumis à des risques élevés de corrosion interne.

L'invention remédie à ces inconvénients en proposant un élément de renfort s'étendant de manière continue entre les perçages de fixation et comportant des moyens d'évacuation des liquides circulant dans le longeron, et par exemple des produits de condensation.

Dans ce but, l'invention propose un agencement du type décrit précédemment, caractérisé en ce que les moyens de rigidification sont constitués d'un élément de renfort commun dont une paroi inférieure est soudée sur la paroi inférieure du longeron et comporte deux perçages qui coïncident avec les perçages de fixation de la paroi inférieure du longeron.

Selon d'autres caractéristiques de l'invention:
- l'élément de renfort présente la forme d'un bac comportant au moins quatre parois de bordure sensiblement verticales et la paroi inférieure dans laquelle est agencé au moins un orifice d'évacuation des liquides, et notamment de produits de condensation, formés dans le longeron, qui coïncide avec au moins un orifice en regard formé dans la paroi inférieure du longeron,
- chaque paroi de bordure comporte, suivant au moins une partie de sa longueur, une extrémité inférieure inclinée qui est jointive avec la paroi inférieure pour guider les liquides vers l'orifice d'évacuation, et qui délimite de surcroît un tunnel longitudinal associé de passage des liquides entre l'élément de renfort et le longeron.
- les parois de bordure comportent chacune une extrémité inférieure inclinée suivant toute leur longueur.
- les deux perçages de la paroi inférieure du longeron et les deux perçages de la paroi inférieure de l'élément de renfort commun sont décalés longitudinalement,
- la paroi inférieure de l'élément de renfort comporte une nervure tubulaire sensiblement transversale, qui est interposée longitudinalement entre les deux perçages de la paroi inférieure, pour permettre le passage des liquides d'un tunnel longitudinal à l'autre sous l'élément de renfort, et qui délimite deux cavités avant et arrière dans l'élément de renfort.
- chaque cavité avant et arrière comporte un orifice d'évacuation des liquides,
- la paroi inférieure comporte au moins un des orifices d'évacuation qui est accolé dans la cavité arrière à la base de la nervure,
- une face supérieure de la nervure comporte un orifice supplémentaire d'évacuation des liquides,
- la paroi inférieure comporte dans une des cavités au moins un perçage pilote qui est destiné à recevoir un élément de mise en position de l'élément de renfort par rapport au longeron avant son soudage, puis qui est destiné à recevoir un obturateur une fois l'élément de renfort soudé dans le longeron,
- chaque perçage de l'élément de renfort reçoit une douille de fixation de l'élément mécanique du véhicule par des vis.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement selon l'invention ;
- la figure 2 est une vue de détail en coupe transversale par le plan 2-2 de la figure 1 d'un premier mode de réalisation de l'élément de renfort de l'agencement selon l'invention ;
- la figure 3 est une vue de détail en coupe transversale par le plan 2-2 de la figure 1 d'un second mode de réalisation de l'élément de renfort de l'agencement selon l'invention ;
- la figure 4 est une vue de détail en coupe transversale par le plan 4-4 de la figure 1 de l'agencement selon l'invention ;
- la figure 5 est une vue de détail en perspective d'un agencement comportant un élément de renfort réalisé selon le premier mode de réalisation de l'invention.

Dans la description qui va suivre, des chiffres de référence identiques désignent des pièces identiques ou ayant des fonctions similaires.

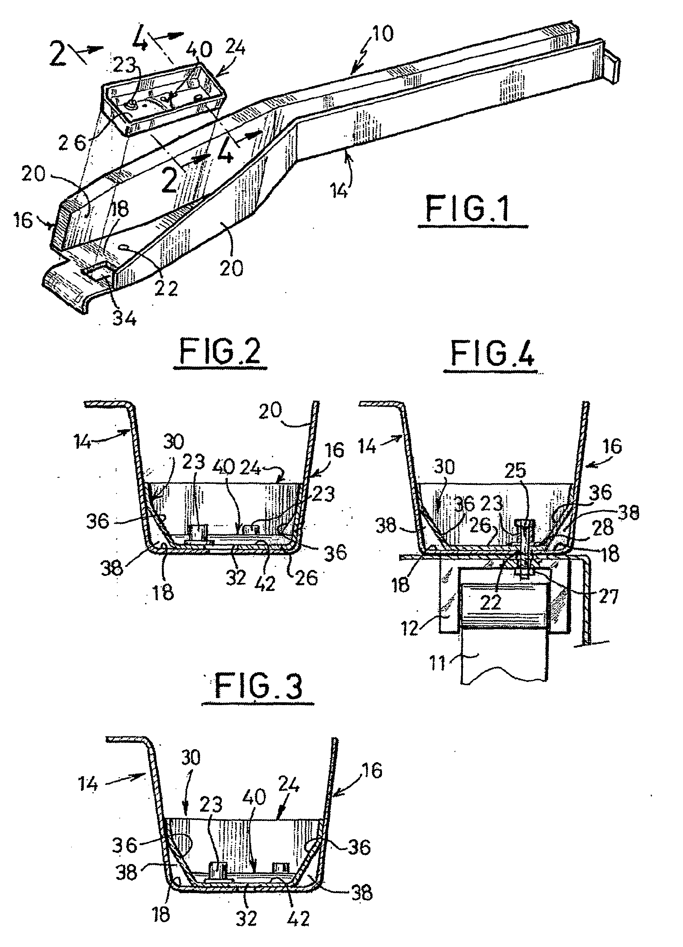

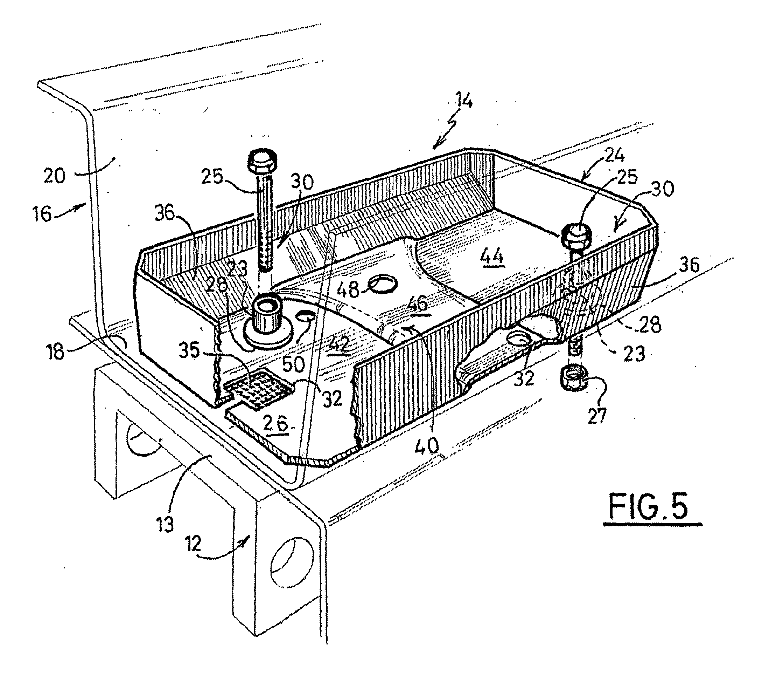

Par convention, les termes "supérieur" ou "inférieur" désignent respectivement des éléments ou des positions orientés respectivement vers le haut ou le bas des figures 1 à 5, et les termes "avant" ou "arrière" désignent respectivement des éléments ou des positions orientés respectivement vers la gauche ou la droite des figures 1 et 5.

On a représenté aux figures 1, 4, et 5 l'ensemble d'un agencement 10 pour la fixation d'un élément 12 mécanique de véhicule automobile à un longeron 14 longitudinal du véhicule. L'élément mécanique 12 peut par exemple être un palier d'articulation d'un bras 11 de suspension du véhicule.

Comme l'illustre la figure 1, le longeron 14 est constitué par exemple d'un profilé tubulaire présentant sensiblement la forme d'un "U" dont une partie 16 d'extrémité comporte une paroi inférieure 18, délimitée par deux ailes 20 sensiblement verticales, dans laquelle sont pratiqués au moins deux perçages 22 décalés transversalement pour la fixation de l'élément mécanique 12 du véhicule. L'élément 12 mécanique comporte par exemple une comporte une face supérieure 13 qui est destinée à être agencée au contact d'une face inférieure de la paroi inférieure 18 du longeron 14.

Conventionnellement, un tel agencement 10 comporte un longeron 14 dont les perçages 22 sont renforcés par des moyens de rigidification formés de plaques (non représentées) qui comportent des perçages coïncidant avec les perçages 22 et qui sont soudées sur la paroi inférieure 18.

Cette conception ne permet pas de rigidifier le longeron 14 entre les plaques de renfort. Par ailleurs, la présence de renforts localisés interdit de pratiquer dans le longeron 14 des orifices d'évacuation des liquides tels que produits de condensation, de sorte que le longeron 14 peut être soumis à des risques élevés de corrosion interne.

Pour remédier à cet inconvénient, l'invention propose un agencement 10 du type décrit précédemment, caractérisé en ce que les moyens de rigidification sont constitués d'un élément 24 de renfort commun dont une paroi inférieure 26 est soudée sur la paroi inférieure 18 du longeron 14 et qui comporte deux perçages 28 qui coïncident avec les perçages 22 de fixation de la paroi 18 inférieure du longeron 14.

Plus particulièrement, comme l'illustre la figure 5, l'élément 24 de renfort présente la forme d'un bac comportant au moins quatre parois 30 de bordure sensiblement verticales et la paroi inférieure 26. Dans cette paroi inférieure 26 est agencé au moins un orifice 32 d'évacuation des produits de condensation formés dans le longeron 14, qui coïncide avec au moins un orifice 34 en regard formé dans la paroi inférieure 18 du longeron 14.

Cette configuration permet avantageusement d'éviter que les produits de condensation formés à l'intérieur du longeron 14 ne stagnant à l'intérieur de celui-ci et ne risquent de provoquer un début de corrosion interne au sein du longeron 14.

Plus particulièrement, comme l'illustrent les figures 2 à 4, pour guider les liquides tels que par exemple les produits de condensation vers l'orifice 32, chacune des parois 30 de bordure comporte sur au moins une partie de sa longueur une extrémité inférieure 36 inclinée qui est jointive avec la paroi inférieure 26. Cette extrémité 36 inclinée est destinée à guider les produits de condensation vers l'orifice 32 d'évacuation.

Les figures 2 et 4 représentent un premier mode de réalisation dans lequel les parois 30 latérales comportent chacune une extrémité 36 inférieure inclinée à l'arrière de l'élément 24 de renfort de renfort, et dans lequel une seule des parois latérales comporte une extrémité 36 inférieure inclinée à l'avant de l'élément 24 de renfort.

Les figures 3 et 4 représentent un second mode de réalisation préféré de l'invention dans lequel les deux parois 30 latérales comportent chacune une extrémité 36 inférieure inclinée suivant toute leur longueur.

Comme l'illustre la figure 5, dans le mode de réalisation préféré de l'invention, les deux perçages 22 de la paroi inférieure 18 du longeron 14 et les deux perçages 28 de la paroi inférieure 26 de l'élément 24 de renfort commun sont décalés longitudinalement. Bien entendu, la disposition des perçages dépend de l'architecture générale du palier 12. Chaque perçage 28 de l'élément de renfort reçoit une douille 23 qui est destinée à recevoir une vis 25 de fixation de l'élément mécanique du véhicule. L'élément mécanique 12 est immobilisé par des écrous 27 qui sont reçus par les vis 25 et qui sont agencés sous l'élément 12 mécanique.

Dans l'exemple illustré aux figures, les deux points de fixation de l'élément mécanique 12 sont alignés suivant une direction diagonale par rapport à l'élément 24 de renfort. Une plaque supérieure 13 est en appui sous la paroi 18 inférieure du longeron, augmentant ainsi la raideur d'accueil, cette configuration garantit une fixation isostatique de l'élément mécanique 12 sous le longeron 14.

Dans le tous les modes de réalisation de l'invention, chacune des parois 30 de bordure comporte au moins une extrémité inclinée 36 qui est jointive avec la paroi inférieure 26, et qui délimite de ce fait de chaque côté de l'élément 24 de renfort un tunnel 38 longitudinal associé permettant le passage des produits de condensation entre l'élément 24 de renfort et le longeron 14. Les produits de condensation peuvent alors être évacués vers l'une ou l'autre des extrémités de l'élément 24 de renfort.

Dans tous les modes de réalisation de l'invention, la paroi 26 inférieure de l'élément 24 de renfort comporte une nervure 40 tubulaire sensiblement transversale, qui est interposée longitudinalement entre les deux perçages 28 de la paroi inférieure 26, pour permettre le passage des produits de condensation d'un tunnel 38 longitudinal à l'autre sous l'élément de renfort 26. Cette nervure 40 délimite deux cavités avant 42 et arrière 44 dans l'élément 24 de renfort. De façon avantageuse, une cavité 42, 44 est formée autour d'un perçage 28.

Pour permettre l'évacuation des produits de condensation qui s'accumulent dans chacune des cavités avant 42 et arrière 44, chaque cavité 42, 44 comporte un orifice 32 d'évacuation des produits de condensation. En particulier, l'orifice 32 de la cavité 44 arrière, qui est agencé dans la paroi 26 inférieure, est, dans la cavité 44 arrière, accolé à la base de la nervure 40 dans laquelle il empiète en partie afin de permettre un écoulement dans cette nervure 40. L'orifice 32 de la cavité avant 42 reçoit par exemple une grille 35 de protection destinée à éviter l'intrusion de corps étrangers dans le longeron 14. A titre de variante non représentée, cette fonction peut également être réalisée au moyen d'un obturateur en caoutchouc ou en matériau élastomère, naturel ou synthétique, qui est percé pour permettre l'évacuation des liquides.

Par ailleurs, des produits de condensation pouvant aussi s'accumuler sur la nervure 40, une face supérieure 46 de la nervure comporte un orifice 48 d'évacuation des produits de condensation, cette face supérieure pouvant aussi présenter une forme bombée convexe.

Pour permettre le positionnement de l'élément 24 de renfort dans le longeron 14 préalablement à sa fixation audit longeron 14 par soudage, la paroi inférieure 26 comporte dans une des cavités avant 42 ou arrière 44 au moins un perçage pilote 50. Ce perçage pilote 50 est destiné à recevoir un élément (non représenté) de mise en position de l'élément 24 de renfort par rapport au longeron 14, qui traverse le longeron 14 et est reçu dans le perçage 50. Puis, une fois le soudage effectué, cet élément est retiré du longeron et de l'élément de renfort 24 et le perçage pilote 50 reçoit un obturateur (non représenté) tel qu'un bouchon réalisé en un matériau élastomère.

Selon une variante de réalisation non représentée, les parois latérales 30 comportent, dans leurs extrémités supérieures sensiblement verticales, une découpe ou forme de créneaux, de sorte que la surface de contact entre les parois 30 et les ailes 20 n'est pas continue. La mise en place de l'élément de renfort 24 et la propagation de la peinture lors de la cataphorèse sont ainsi facilitées.

L'invention permet donc de renforcer de manière fiable un longeron 14 au voisinage de ses perçages 22 de fixation tout en permettant l'évacuation des produits de condensation dans ledit longeron 14.

## Revendications

1. Agencement (10) pour la fixation d'un élément (12) mécanique de véhicule automobile à un longeron (14) longitudinal du véhicule, du type dans lequel le longeron (14) est constitué d'un profilé tubulaire présentant sensiblement la forme d'un "U" dont une partie d'extrémité (16) comporte une paroi inférieure (18), délimitée par deux ailes (20) sensiblement verticales, dans laquelle sont pratiqués au moins deux perçages (22) pour la fixation d'un élément mécanique (12) du véhicule, et du type dans lequel le longeron (14) reçoit des moyens de rigidification agencés dans le longeron (14) au droit de ses perçages (22) de fixation,
dans lequel les moyens de rigidification sont constitués d'un élément (24) de renfort commun dont une paroi inférieure (26) est soudée sur la paroi inférieure (18) du longeron (14) et comporte deux perçages (28) qui coïncident avec les perçages (22) de fixation de la paroi inférieure (18) du longeron (14),
**caractérisé en ce que** l'élément (24) de renfort présente la forme d'un bac comportant au moins quatre parois (30) de bordure sensiblement verticales et la paroi inférieure (26) dans laquelle est agencé au moins un orifice (32) d'évacuation des liquides formés dans le longeron (14), qui coïncide avec au moins un orifice (34) en regard formé dans la paroi inférieure (18) du longeron.

2. Agencement (10) selon la revendication précédente, **caractérisé en ce que** chaque paroi (30) de bordure comporte, suivant au moins une partie de sa longueur, une extrémité (36) inférieure inclinée qui est jointive avec la paroi inférieure (26) pour guider les liquides vers l'orifice (32) d'évacuation, et qui délimite de surcroît un tunnel (38) longitudinal associé de passage des liquides entre l'élément (24) de renfort et le longeron (14).

3. Agencement (10) selon la revendication précédente, **caractérisé en ce que** les parois (30) de bordure comportent chacune une extrémité (36) inférieure inclinée suivant toute leur longueur.

4. Agencement (10) selon l'une des revendications 2 ou 3 **caractérisé en ce que** la paroi (26) inférieure de l'élément de renfort comporte une nervure (40) tubulaire sensiblement transversale, qui est interposée longitudinalement entre les deux perçages (28) de la paroi inférieure (26), pour permettre le passage des liquides d'un tunnel (38) longitudinal à l'autre sous l'élément (24) de renfort, et qui délimite deux cavités avant (42) et arrière (44) dans l'élément (24) de renfort.

5. Agencement (10) selon la revendication précédente prise en combinaison avec la revendication 2, **caractérisé en ce que** chaque cavité avant (42) et arrière (44) comporte un orifice (32) d'évacuation des liquides.

6. Agencement (10) selon la revendication précédente, **caractérisé en ce que** la paroi inférieure comporte au moins un des orifices (32) d'évacuation qui est accolé dans la cavité arrière (44) à la base de la nervure (40).

7. Agencement (10) selon l'une des revendications 4 à 6, **caractérisé en ce qu'**une face supérieure (46) de la nervure (40) comporte un orifice supplémentaire (48) d'évacuation des liquides.

8. Agencement (10) selon l'une des revendications 4 à 7, **caractérisé en ce que** la paroi inférieure (26) comporte dans une des cavités (42) au moins un perçage pilote quoi est destiné à recevoir un élément de mise en position de l'élément (24) de renfort par rapport au longeron (14) avant son soudage, puis qui est destiné à recevoir un obturateur une fois l'élément (24) de renfort soudé dans le longeron.

9. Agencement (10) selon l'une quelconque des revendications précédentes, **caractérisé en ce que** chaque perçage (28) de l'élément (24) de renfort reçoit une douille (23) de fixation de l'élément mécanique du véhicule à l'aide de vis (25).

## Claims

1. Arrangement (10) for fixing a motor vehicle mechanical element (12) to a longitudinal side member (14) of the vehicle, of the type in which the side member (14) consists of a substantially U-shaped tubular section having one end part (16) comprising a bottom wall (18), delimited by two substantially vertical flanges (20) in which at least two drill holes (22) are made for fixing a mechanical element (12) of the vehicle, and of the type in which the side member (14) receives stiffening means arranged in the side member (14) in line with its fixing drill holes (22),
in which the stiffening means consist of a common reinforcing element (24) of which a bottom wall (26) is welded to the bottom wall (18) of the side member (14) and comprises two drill holes (28) that coincide with the fixing drill holes (22) of the bottom wall (18) of the side member (14), **characterized in that** the reinforcing element (24) has the shape of a tray comprising at least four substantially vertical surrounding walls (30) and the bottom wall (26) in which at least one hole (32) is arranged, for draining away the liquids formed in the side member (14), which coincides with at least one hole (34) opposite formed in the bottom wall (18) of the side member.

2. Arrangement (10) according to the preceding claim, **characterized in that** each surrounding wall (30) comprises, along at least one part of its length, an inclined bottom end (36) that is in contact with the bottom wall (26) to guide the liquids toward the drain hole (32) and that additionally delimits an associated longitudinal tunnel (38) for the liquids to pass between the reinforcing element (24) and the side member (14).

3. Arrangement (10) according to the preceding claim, **characterized in that** the surrounding walls (30) each comprise an inclined bottom end (36) along their whole length.

4. Arrangement (10) according to one of Claims 2 or 3, **characterized in that** the bottom wall (26) of the reinforcing element comprises a substantially transverse tubular rib (40), that is interposed longitudinally between the two drill holes (28) of the bottom wall (26), to allow the liquids to pass from one longitudinal tunnel (38) to the other beneath the reinforcing element (24) and that delimits two cavities, a front cavity (42) and a rear cavity (44), in the reinforcing element (24).

5. Arrangement (10) according to the preceding claim, taken in combination with Claim 2, **characterized in that** each cavity, the front cavity (42) and rear cavity (44), comprises a drain hole (32) for the liquids.

6. Arrangement (10) according to the preceding claim, **characterized in that** the bottom wall comprises at least one of the drain holes (32) that is juxtaposed in the rear cavity (44) at the base of the rib (40).

7. Arrangement (10) according to one of Claims 4 to 6, **characterized in that** a top face (46) of the rib (40) comprises an additional drain hole (48) for the liquids.

8. Arrangement (10) according to one of Claims 4 to 7, **characterized in that** the bottom wall (26) comprises, in one of the cavities (42), at least one pilot drill hole (50) that is designed to receive an element for positioning the reinforcing element (24) relative to the side member (14) before it is welded, and then that is designed to receive a stopper once the reinforcing element (24) is welded into the side member.

9. Arrangement (10) according to any one of the preceding claims, **characterized in that** each drill hole (28) of the reinforcing element (24) receives a bush (23) for fixing the mechanical element of the vehicle with the aid of screws (25).

## Patentansprüche

1. Anordnung (10) zur Befestigung eines mechanischen Elements (12) eines Kraftfahrzeugs an einem Längsträger (14) des Fahrzeugs jener Art, bei der der Längsträger (14) aus einem röhrenförmigen Profil besteht, das im Wesentlichen die Form eines "U" aufweist, von dem ein Endteil (16) eine untere Wand (18) aufweist, die von zwei im Wesentlichen vertikalen Schenkeln (20) begrenzt wird und in der mindestens zwei Bohrungen (22) zur Befestigung eines mechanischen Elements (12) des Fahrzeugs ausgebildet sind, und jener Art, bei der der Längsträger (14) Versteifungsmittel aufnimmt, die im Längsträger (14) im Bereich seiner Befestigungsbohrungen (22) angeordnet sind,
wobei die Versteifungsmittel aus einem gemeinsamen Verstärkungselement (24) bestehen, von dem eine untere Wand (26) auf die untere Wand (18) des Längsträgers (14) geschweißt ist und zwei Bohrungen (28) aufweist, die mit den Befestigungsbohrungen (22) der unteren Wand (18) des Längsträgers (14) zusammenfallen,
**dadurch gekennzeichnet, dass** das Verstärkungselement (24) die Form einer Wanne aufweist, die mindestens vier im Wesentlichen vertikale Begrenzungswände (30) und die untere Wand (26) umfasst, in der mindestens eine Öffnung (32) zum Ablassen von im Längsträger (14) gebildeten Flüssigkeiten ausgebildet ist, die mit mindestens einer in der unteren Wand (18) des Längsträgers ausgebildeten, gegenüberlegenden Öffnung (34) zusammenfällt.

2. Anordnung (10) nach dem vorhergehenden Anspruch, **dadurch gekennzeichnet, dass** jede Begrenzungswand (30) über mindestens einen Teil ihrer Länge ein geneigtes, unteres Ende (36) aufweist, das an die untere Wand (26) angrenzt, um die Flüssigkeiten zu der Ablassöffnung (32) zu führen, und das des Weiteren einen zugeordneten Längstunnel (38) zum Passieren von Flüssigkeiten zwischen dem Verstärkungselement (24) und dem Längsträger (14) begrenzt.

3. Anordnung (10) nach dem vorhergehenden Anspruch, **dadurch gekennzeichnet, dass** die Begrenzungswände (30) über ihre ganze Länge jeweils ein geneigtes unteres Ende (36) aufweisen.

4. Anordnung (10) nach Anspruch 2 oder 3, **dadurch gekennzeichnet, dass** die untere Wand (26) des Verstärkungselements eine im Wesentlichen quer verlaufende, röhrenförmige Rippe (40) aufweist, die in Längsrichtung zwischen den beiden Bohrungen (28) der unteren Wand (26) angeordnet ist, um das Passieren der Flüssigkeiten von einem Längstunnel (38) zum anderen unter dem Verstärkungselement (24) zu gestatten, und die zwei Hohlräume, einen vorderen (42) und einen hinteren (44), im Verstärkungselement (24) begrenzt.

5. Anordnung (10) nach dem vorhergehenden Anspruch in Kombination mit Anspruch 2, **dadurch gekennzeichnet, dass** jeder vordere (42) und hintere (44) Hohlraum eine Öffnung (32) zum Ablassen der Flüssigkeiten aufweist.

6. Anordnung (10) nach dem vorhergehenden Anspruch, **dadurch gekennzeichnet, dass** die untere Wand mindestens eine Ablassöffnung (32) aufweist, die am Fuß der Rippe (40) an den hinteren Hohlraum (44) angefügt ist.

7. Anordnung (10) nach einem der Ansprüche 4 bis 6, **dadurch gekennzeichnet, dass** eine Oberseite (46) der Rippe (40) eine zusätzliche Öffnung (48) zum Ablassen der Flüssigkeiten aufweist.

8. Anordnung (10) nach einem der Ansprüche 4 bis 7, **dadurch gekennzeichnet, dass** die untere Wand (26) in einem der Hohlräume (42) mindestens eine Führungsbohrung (50) aufweist, die zum Aufnehmen eines Elements zur Positionierung des Verstärkungselements (24) bezüglich des Längsträgers (14) vor seinem Verschweißen bestimmt ist und die dann dazu bestimmt ist, einen Verschluss aufzunehmen, wenn das Verstärkungselement (24) in dem Längsträger verschweißt ist.

9. Anordnung (10) nach einem der vorhergehenden Ansprüche, **dadurch gekennzeichnet, dass** jede Bohrung (28) des Verstärkungselements (24) eine Hülse (23) zur Befestigung des mechanischen Elements des Fahrzeugs mit Hilfe einer Schraube (25) aufnimmt.
